# EUROPÄISCHE PATENTANMELDUNG

(11) **EP 2 728 719 A1**
(43) Veröffentlichungstag der Anmeldung: **07.05.2014**
(21) Anmeldenummer: 12190603.6
(22) Anmeldetag: 30.10.2012
(51) Int. Cl.: H02K 17/16

(54) **Käfigläufer und Stab mit einem Einschnitt**

(71) Anmelder: Siemens Aktiengesellschaft, 80333 München (DE)
(72) Erfinder: Brandl, Konrad, 93107 Thalmassing (DE); Pfaller, Maximilian, 90441 Nürnberg (DE); Piotrowski, Patryk, 90459 Nürnberg (DE); Trepper, André, 91052 Erlangen (DE); Deeg, Christian, 90518 Altdorf (DE); Fichtner, Siegfried, 90584 Allersberg (DE)

(57) **Zusammenfassung**

Die Erfindung betrifft einen Käfigläufer (3,23,33,43,63,73, 83,93) für eine elektrische Maschine (4,24,34,44,64,74,84,94) umfassend ein Läuferblechpaket (5), das eine Nut (6) aufweist, ein an einem axialen Ende (7) des Läuferblechpakets (5) angegossener Kurzschlussring (8,38), der ein erstes Material (108) aufweist, und einen Stab (9,29,39,49,69,79,99), der in der Nut (6) angeordnet ist und ein Stabende (14,244, 344,444) aufweist, wobei das Stabende (14,244, 344,444) durch einen Einschnitt (10,20,30,40, 140, 402,691,791,892), den das Stabende (14,244,344,444) aufweist, biegbar ist, wobei der Einschnitt (10,20,30,40,140, 402,691,791,892) eine Schnittfläche (1010,120,130,41,1400, 1402) mit dem Stabende (14,244,344, 444) aufweist, eine elektrische Maschine (4,24, 34,44,64,74, 84,94) umfassend einen Käfigläufer (3,23,33,43, 63,73,83,93), einen Stab (9, 29, 39, 49, 69, 79, 99) für einen Käfigläufer (3,23, 33,43,63,73,83,93) und ein Verfahren zur Herstellung eines Käfigläufers (3,23,33,43, 63,73,83,93) nach einem der Ansprüche 1 bis 9, wobei das Stabende (14,244,344, 444), das den Einschnitt (10,20,30,40,140, 402,691,791,892) aufweist, biegbar an der Nut (6) angeordnet wird.

## Beschreibung

Die Erfindung betrifft einen Käfigläufer gemäß dem Oberbegriff des Patentanspruchs 1, eine elektrische Maschine, die den Käfigläufer umfasst und einen Stab für den Käfigläufer. Ferner betrifft die Erfindung ein Verfahren zur Herstellung des Käfigläufers.

Ein derartiger Käfigläufer ist aus der WO 2012/041943 A2 bekannt. Es werden dort zur Verbesserung der Qualität eines Käfigläufers und einer Asynchronmaschine Maßnahmen beschrieben, um die dabei auftretenden Probleme zu überwinden oder zu reduzieren. Es wird dort beschrieben, dass ein Käfigläufer einer Asynchronmaschine einen Stab in einem Läuferblechpaket aufweist, wobei der Stab an einer Kippstelle kippbar ist. Der Stab ist dabei vorteilhaft so kippbar, dass dessen Enden zu einer Achse des Käfigläufers hin gekippt werden können. Im Endbereich des Läuferblechpakets ergibt sich also ein Spalt zum Stab, wobei der Stab eine Biegung in Richtung des Spaltes vollziehen kann. Der Spalt ermöglicht also eine Biegung der Enden der Läuferstäbe zur Achse hin. Dies hat den Vorteil, dass der Stab einer Kraft nachgeben kann, die entsteht, wenn sich bei Erstarrung der Schmelze der Kurzschlussring zusammenzieht und eine Kraft auf den Stab in Richtung der Achse des Käfigläufers ausübt. So wird dem Problem entgegengewirkt, dass sich der Übergangswiderstand zwischen dem Kurzschlussring und dem Stab erhöht, wenn der Stab nicht dem beim Abkühlvorgang schrumpfenden Kurzschlussring folgen kann. Die Verbindungsstelle zwischen Stab und Kurzschlussring ist maßgeblich für die Betriebsdaten des Käfigläufers oder der elektrischen Maschine verantwortlich. Eine Verbesserung dieser führt automatisch zu besseren elektrischen Daten, insbesondere des Wirkungsgrades.

Aufgrund der Bestrebungen, den Energieverbrauch maßgeblich zu reduzieren, ist es von zentraler Bedeutung, einen weiteren technischen Beitrag zu leisten, der alleine, alternativ oder in Kombination mit bekannten Maßnahmen eine elektrische Maschine mit hohem Wirkungsgrad ermöglicht.

Der Erfindung liegt daher die Aufgabe zugrunde, einen Käfigläufer für eine elektrische Maschine mit hohem Wirkungsgrad zur Verfügung zu stellen.

Die Aufgabe wird durch einen Käfigläufer für eine elektrische Maschine mit den Merkmalen des Anspruchs 1 gelöst.

Der erfindungsgemäße Käfigläufer für eine elektrische Maschine umfasst
- ein Läuferblechpaket, das eine Nut aufweist,
- ein an einem axialen Ende des Läuferblechpakets angegossener Kurzschlussring, der ein erstes Material aufweist, und
- einen Stab, der in der Nut angeordnet ist und ein Stabende aufweist,
wobei das Stabende durch einen Einschnitt, den das Stabende aufweist, biegbar ist, wobei der Einschnitt eine Schnittfläche mit dem Stabende aufweist.

Die Aufgabe wird auch durch eine elektrische Maschine mit den Merkmalen nach Anspruch 10 gelöst.

Die erfindungsgemäße elektrische Maschine umfasst einen erfindungsgemäßen Käfigläufer.

Die Aufgabe wird auch durch einen Stab für einen Käfigläufer mit den Merkmalen nach Anspruch 11 gelöst.

Ein erfindungsgemäßer Stab ist für einen erfindungsgemäßen Käfigläufer.

Ferner wird die Aufgabe durch ein Verfahren zur Herstellung eines Käfigläufers nach Anspruch 12 gelöst.

Bei dem erfindungsgemäßen Verfahren zur Herstellung eines erfindungsgemäßen Käfigläufers wird das Stabende, das den Einschnitt aufweist, biegbar an der Nut angeordnet.

Der erfindungsgemäße Käfigläufer löst die Aufgabe vorteilhaft, indem das Stabende durch einen Einschnitt biegbar ist. So kann das Stabende einem Schrumpfen des ersten Materials bei einem Erstarren nach oder während des Angiessens des Kurzschlussrings vorteilhaft folgen, da ein radiales Biegemoment des Stabes, das den beim Schrumpfen des ersten Materials auf dem Stabende wirkenden Kräften entgegenwirkt, durch den Einschnitt am Stabende reduziert wird. Hierdurch wird eine vorteilhafte Verbindung zwischen dem Stab und dem angegossenen Kurzschlussring erreicht, die zu einem niedrigen elektrischen Widerstand zwischen dem Stab und dem Kurzschlussring führt und damit zu einem Käfigläufer für eine elektrische Maschine mit einem hohen Wirkungsgrad führt.

Weiterhin wird vorteilhaft eine mechanisch feste Verbindung zwischen dem Stab und dem angegossenen Kurzschlussring erreicht, da der Stab dem Schrumpfen des ersten Materials beim Erstarren der Schmelze entsprechend folgen kann.

Das Stabende kann abhängig von den Kräften, die beim Schrumpfen des ersten Materials auf das Stabende wirken, eine Biegung aufweisen. Die Deformation, die das Stabende dabei erfährt, kann eine elastische Deformation sein. So liegt vorteilhaft ein linearer Zusammenhang zwischen der durch das Erstarren der Schmelze wirkenden Kraft und der Strecke vor, die der Stab der erstarrenden Schmelze folgt.

Die Deformation des Stabendes kann eine plastische Deformation sein. So kann den beim Schrumpfen des ersten Material wirkenden Kräften mit einer definierten Gegenkraft entgegenwirkt werden, deren zeitlicher Verlauf dem zeitlichen Verlauf der wirkenden Kräfte so angepasst ist, dass eine vorteilhafte Verbindung zwischen dem Stab und dem angegossenen Kurzschlussring erreicht wird.

Der Stab weist eine größte Erstreckung in einer axialen Stabrichtung von dem Stabende zu einem weiteren Stabende auf, die als Stablänge gemessen wird. Es erstrecken sich senkrecht zur axialen Stabrichtung innerhalb des Stabes Querschnittsebenen. Der Stab weist in den Querschnittsebenen eine erste Stabrichtung auf, in der eine Stabbreite gemessen wird, und er weist eine zweite Stabrichtung auf, in der eine Stabhöhe gemessen wird.

Die Stabhöhe kann vorteilhaft größer sein als die Stabbreite. Unter anderem weist der Stab dadurch bei einem Anlauf einer elektrischen Maschine mit dem Käfigläufer einen hohen wirksamen elektrischen Widerstand und in einem Betrieb der elektrischen Maschine einen niedrigen wirksamen elektrischen Widerstand auf.

Der Stab kann vorteilhaft unsymmetrisch zur ersten Stabrichtung sein. Durch die Unsymmetrie des Stabes zur ersten Stabrichtung, kann eine unsymmetrische Geometrie für Querschnittsebenen des Stabes so gewählt werden, dass der Stab bei einem Anlauf einer elektrischen Maschine mit dem Käfigläufer einen vorteilhaften hohen wirksamen elektrischen Widerstand aufweist, der mit einer zunehmender Drehzahl des Käfigläufers in einem Betrieb der elektrischen Maschine sich in vorteilhafter Weise in einen niedrigen wirksamen elektrischen Widerstand ändert.

Die Stablänge, Stabbreite und Stabhöhe sind Abmessungen des Stabes. Der Stab weist ein zweites Material auf, das z.B. Kupfer sein kann.

Eine Oberfläche des Stabendes weist den Einschnitt auf, wobei sich der Einschnitt von der Oberfläche des Stabes mit einer Einschnitttiefe in den Stab hinein erstreckt. Somit weist der Einschnitt eine Schnittfläche mit dem Stab auf.

Der Einschnitt kann vorteilhaft mit geringen Aufwand hergestellt werden. So kann der Einschnitt mit geringen Aufwand durch Einsägen des Stabes hergestellt werden.

Das Stabende kann vorteilhaft mehrere Einschnitte aufweisen. So kann die Biegbarkeit des Stabendes verbessert werden und eine für den elektrischen Widerstand wirksame Querschnittsfläche der Querschnittsebenen vorteilhaft erreicht werden.

Bei einem Betrieb der elektrischen Maschine kann auch über eine Wicklung des Stators elektrische Energie zugeführt werden, und durch das magnetische Zusammenwirken zwischen Stator und Käfigläufer in mechanische Energie umgewandelt werden. Dabei wird der Käfigläufer in Drehung versetzt und es kann an einer Welle mechanische Energie an einen mechanischen Verbraucher in Form einer Drehbewegung abgegeben werden.

Für die Drehung des Käfigläufers um eine Drehachse weist der Käfigläufer eine Welle auf, die sich entlang der Drehachse erstreckt und an der das Läuferblechpaket befestigt ist. Das Läuferblechpaket umfasst Bleche, die von einem axialen Ende des Läuferblechpakets zu einem weiteren axialen Ende des Läuferblechpakets geschichtet angeordnet sind. Die Bleche weisen für eine Aufnahme des Stabes Öffnungen auf, die die Nut bilden. Für das magnetische Zusammenwirken des Käfigläufers mit dem Stator weist der Käfigläufer eine Wicklung auf. Die Wicklung umfasst den Stab und den angegossenen Kurzschlussring, der die Wicklung kurzschließt. Je niedriger der elektrische Widerstand, insbesondere der im Betrieb der elektrischen Maschine wirksame Widerstand, der Wicklung des Käfigläufers ist, umso höher ist der Wirkungsgrad der bei einer elektrischen Maschine mit dem Käfigläufer erreicht wird. Um eine vorteilhafte Drehung des Käfigläufers in der elektrischen Maschine zu erreichen, weist der Käfigläufer einen oder mehrere weitere Stäbe auf, wobei der Stab und der weitere bzw. die weiteren Stäbe sich vom axialen Ende des Läuferblechpakets zum weiteren axialen Ende des Läuferblechpakets erstrecken, und an dem axialen Ende durch den angegossenen Kurzschlussring elektrisch und mechanisch vorteilhaft in gleicher Weise wie der Stab mit dem angegossenen Kurzschlussring verbunden sind. An dem weitern axialen Ende des Läuferblechpakets sind der Stab und der weitere Stab bzw. weitere Stäbe entsprechend durch einen weiteren angegossenen Kurzschlussring vorteilhaft in gleicher Weise wie der Stab an dem Stabende mit dem angegossenen Kurzschlussring verbunden. Für eine Befestigung des Stabes, des weiteren Stabes oder der weiteren Stäbe kann sich das erste Material des angegossenen Kurzschlussrings durch die Nut zum weiteren angegossenen Kurzschlussring erstrecken.

Eine axiale Richtung ist eine Richtung parallel zur Drehachse, eine radiale Richtung ist eine Richtung senkrecht zur Drehachse. Entfernt man sich von der Drehachse in einer radialen Richtung, erreicht man zunächst den Nutgrund der Nut und dann den Stab, der in der Nut angeordnet ist.

Eine elektrische Maschine kann ein Gehäuse zum Schutz der elektrischen Maschine aufweisen, in dem der Stator angeordnet ist, und der Rotor zwischen dem Stator drehbar gelagert ist. Die drehbare Lagerung des Käfigläufers kann über die Welle durch Lager im Gehäuse erfolgen.

Eine erfindungsgemäße elektrische Maschine weist neben den bereits angeführten Vorteilen auch den weiteren Vorteil auf, dass neben dem hohen Wirkungsgrad der elektrischen Maschine die Lager zur Lagerung des Käfigläufers im Gehäuse einen geringeren Verschleiß aufweisen. Aufgrund des Einschnitts am Stabende treten Abweichungen in einer symmetrischen Massenverteilung des Käfigläufers in größerem Maße am Stabende auf. Am Kurzschlussring können diese vorteilhaft in nächster Nähe einfach durch Wuchtmassen kompensiert werden, so dass eine geringe Unwucht des Käfigläufers erreicht wird. Der geringe Verschleiß der Lager verursacht geringe Reibungsverluste in den Lagern, so dass eine elektrische Maschine mit hohem Wirkungsgrad zur Verfügung gestellt werden kann.

Ein erfindungsgemäßes Verfahren zur Herstellung eines erfindungsgemäßen Käfigläufers weist auch den weiteren Vorteil auf, dass das Stabende beim Angiessen des Kurzschlussrings vorteilhaft gebogen wird. Unter anderem kann das Stabende durch den Einschnitt beim Erstarren der Schmelze durch die wirkenden Kräfte schrittweise gebogen werden, ohne die Herstellung des Käfigläufers zu behindern.

Vorteilhafte Ausgestaltungen der Erfindung sind in den abhängigen Ansprüchen angegeben.

So ist eine Ausgestaltung des erfindungsgemäßen Käfigläufers vorteilhaft, bei der das Stabende durch den Einschnitt eine stärkere Biegung aufweist, als ein Stababschnitt, der innerhalb der Nut angeordnet ist. Dadurch kann das Stabende dem Schrumpfen der Schmelze mit einem geringeren Verbiegen des Stabes in der Nut folgen. Der Stab kann vorteilhaft in der Nut gelagert sein. Es kann somit eine geringere Unwucht des Käfigläufers erreicht werden. Es werden vorteilhaft Leerräume in der Nut vermieden, die eine Bewegung des Stabes in der Nut, z.B. bei hohen Drehzahlen des Stabs, verursachen. So wird ein geringerer Verschleiß der Lager erreicht.

Der Stab kann vorteilhaft die Nut ausfüllen. Unter anderem wird so der Querschnitt der Nut komplett für den Stab genutzt, wodurch ein vorteilhaft niedriger elektrischer Widerstand erreicht wird.

Der Stab kann vorteilhaft in einem Nutgrund der Nut angeordnet sein. So kann ein hoher Füllgrad des Querschnitts der Nut erreicht werden, wobei das erste Material vorteilhaft in einem Bereich der Nut vorhanden ist, der in einer radialen Richtung weiter von der Drehachse entfernt ist als der Stab. So wird ein vorteilhaft niedriger elektrischer Widerstand erreicht.

Die Nut kann vorteilhaft einen Bereich aufweisen, der mit dem ersten Material ausgefüllt ist. Das erste Material kann vorteilhaft in dem Bereich erstarren und unter anderem wird das Erstarren des ersten Materials in dem Bereich durch das geringere Verbiegen des Stabes in der Nut weniger gestört, so dass das erste Material nach dem Erstarren vorteilhafte Eigenschaften aufweist, die in einer definierten Weise erreicht werden. So können elektrische Maschinen mit hohem Wirkungsgrad zur Verfügung gestellt werden.

In einer weiteren vorteilhaften Ausgestaltung eines erfindungsgemäßen Käfigläufers weist eine Mantelfläche des Stabs den Einschnitt auf. Der Einschnitt kann vorteilhaft in einfacher Weise an der Mantelfläche des Stabendes hergestellt werden. Unter anderem kann der Stab für ein Herstellen des Einschnitts in der Mantelfläche vorteilhaft einfach fixiert werden. Insbesondere wenn sich die Schnittfläche über mehr als 60 Prozent der Stabhöhe erstreckt, wird eine Biegbarkeit der Stabenden erreicht, bei der der Stab einem Schrumpfen des ersten Materials bei einem Erstarren der Schmelze nach oder während eines Angiessens des Kurzschlussrings vorteilhaft folgen kann. Insbesondere befindet sich dabei der Einschnitt in einem Bereich der Mantelfläche, der in einer radialen Richtung von der Drehachse abgewandt ist. So wird ein notwendiges Maß an Biegbarkeit der Stabenden erreicht.

Die Mantelfläche kann einen weiteren Einschnitt auf einer dem Einschnitt gegenüber liegenden Seite der Mantelfläche aufweisen, wobei die Mantelfläche den weiteren Einschnitt in der axialen Stabrichtung versetzt zu dem Einschnitt aufweist. Es kann so vorteilhaft ein höheres Maß an Biegbarkeit des Stabendes erreicht werden, wobei der elektrische Widerstand des Stabs vorteilhaft niedrig ist, da der Wert für eine kleinste wirksame Querschnittsfläche für den elektrischen Widerstand gegenüber dem Stab mit nur einem Einschnitt unverändert ist.

In einer weiteren vorteilhaften Ausgestaltung eines erfindungsgemäßen Käfigläufers weist eine Stirnfläche des Stabs den Einschnitt auf. Die Stirnfläche ist die Querschnittsebene, die am Stabende oder am weiteren Stabende in einem unverbauten Zustand des Stabes sichtbar ist, da sie eine Oberfläche des Stabs bildet. Dadurch, dass die Stirnfläche des Stabs den Einschnitt aufweist, wird die Biegbarkeit des Stabendes erhöht, wobei der niedrige elektrische Widerstand des Stabs über die gesamte Stablänge in hohem Maße erhalten bleibt. Weiterhin vorteilhaft ist, dass die Festigkeit des Stabs über die gesamte Stablänge nur in geringem Maße abweicht. So weist der Stab eine vorteilhafte mechanische Stabilität auf.

In einer weiteren vorteilhaften Ausgestaltung eines erfindungsgemäßen Käfigläufers erstreckt sich der Einschnitt an der Stirnfläche in einer Richtung, die eine betragsmäßig größte vektorielle Komponente in einer ersten Stabrichtung aufweist. Hierdurch wird vorteilhaft die Biegbarkeit des Stabendes erhöht, da das Widerstandsmoment des Stabendes erniedrigt. Insbesondere wird die Biegbarkeit des Stabes vorteilhaft erhöht, wenn der Stab eine Stabhöhe aufweist, die größer ist als die Stabbreite. Insbesondere erstreckt sich der Einschnitt in die Stirnfläche vorteilhaft in die erste Richtung um eine maximale vorteilhafte Erniedrigung des Widerstandsmoments durch den Einschnitt in die Stirnfläche zu erreichen.

In einer weiteren vorteilhaften Ausgestaltung eines erfindungsgemäßen Käfigläufers erstreckt sich der Einschnitt an der Stirnfläche in eine Richtung, die eine betragsmäßig größte vektorielle Komponente in einer zweiten Stabrichtung aufweist. Durch den Einschnitt in die Stirnfläche wird eine vorteilhafte Erniedrigung des Widerstandsmoments erreicht, die zu einer vorteilhaften Biegbarkeit des Stabendes führt.

Wenn der Stab einen Einschnitt in die Stirnfläche aufweist, der sich wie beschrieben im Wesentlichen in einer ersten Stabrichtung erstreckt, kann in vorteilhafter Weise ein weiterer Einschnitt an der Stirnfläche vorhanden sein, der sich in eine Richtung erstreckt, die sich wie beschrieben im Wesentlichen in der zweiten Stabrichtung erstreckt. So weisen Bereiche zwischen den Einschnitten eine vorteilhaft große Abmessung in der ersten und in der zweiten Stabrichtung auf. Unter anderem können die Bereiche zwischen den Einschnitten so gewährleistet, dass die Bereiche während des Herstellens des Käfigläufers mit dem Stab so verbunden bleiben, dass sie mit einem niedrigen elektrischen Widerstand mit dem Stab verbunden sind.

In einer weiteren vorteilhaften Ausgestaltung eines erfindungsgemäßen Käfigläufers erstreckt sich die Schnittfläche von dem Stabende zu einem weiteren Stabende des Stabes. Es wird vorteilhaft eine bessere Biegbarkeit des Stabes am Stabende erreicht. Unter anderem können sich Teilleiter, die einen Stab bilden, mit geringerer gegenseitiger Beeinflussung unter Einwirkung der beim Erstarren der Schmelze auf den Stab wirkenden Kraft dehnen bzw. stauchen. Die Schnittfläche erstreckt sich dabei zwischen den Teilleitern, die sich entlang der axialen Stabrichtung erstrecken, wobei Querschnitte der Teilleiter innerhalb der Querschnittsebenen des Stabs angeordnet sind. Die Querschnittsebenen des Stabs bilden eine Hüllkurve, die die Teilleiter umschließt.

Der Einschnitt kann vorteilhaft mit geringen Aufwand hergestellt werden. So kann der Einschnitt durch ein Anordnen der Teilleiter zu der Hüllkurve des Stabes hergestellt worden.

Die Teilleiter können kreisförmige Querschnitte aufweisen. Es wird so vorteilhaft eine bessere Biegbarkeit am Stabende erreicht.

Die Teilleiter können kreisförmige Querschnitte mit einem Durchmesser aufweisen, der einen Wert von bis zu einem Millimeter aufweist. Es wird so vorteilhaft eine bessere Biegbarkeit am Stabende bei einer großen Oberfläche zwischen Teilleitern und Kurzschlussring erreicht. So wird vorteilhaft ein niedriger elektrischer Widerstand bei einer Verbindung zwischen den Teilleitern und dem Kurzschlussring erreicht.

Die Teilleiter können rechteckförmige Querschnitte aufweisen. Es wird so vorteilhaft ein großer Füllgrad der Nut mit den Teilleitern erreicht. Somit wird ein niedriger elektrischer Widerstand des Stabs erreicht.

In einer weiteren vorteilhaften Ausgestaltung eines erfindungsgemäßen Käfigläufers endet der Einschnitt innerhalb des Stabs. Es wird so vorteilhaft eine Biegbarkeit des Stabendes bei einer vorteilhaft geringen Biegbarkeit in einer Mitte des Stabs erreicht.

So kann das Stabende mit einer Austrittslänge an einem axialen Ende des Läuferblechpakets aus der Nut ragen, wobei der Einschnitt eine Schnitttiefe aufweist, die vorteilhaft mindestens die Hälfte der Austrittslänge und maximal die Austrittslänge beträgt. Der Einschnitt kann hier vorteilhaft mit geringen Aufwand durch Einsägen des Stabes hergestellt werden, da unter anderem das Einsägen in einfacher Weise bis zu der Eindringtiefe des Einschnitts vorgenommen werden kann.

In einer weiteren vorteilhaften Ausgestaltung eines erfindungsgemäßen Käfigläufers weist der Stab an dem Einschnitt eine Verbindungsvorrichtung auf. Der Stab wird an dem Einschnitt vorteilhaft zusammengehalten, wobei eine vorteilhafte erfindungsgemäße Biegbarkeit und ein vorteilhaft erfindungsgemäßer niedriger elektrischer Widerstand der Wicklung des Käfigläufers erreicht werden. Unter anderem wird durch die Verbindungsvorrichtung an dem Einschnitt ein genaueres Einlegen des Stabs bei der Herstellung erreicht, so dass beim Herstellen des Käfigläufers bzw. elektrischer Maschinen mit dem Käfigläufer elektrische Maschinen mit einem hohen Wirkungsgrad gefertigt werden können.

Die Verbindungsvorrichtung kann eine Klammer sein, die den Stab so umgibt, dass ein Anordnen des Stabs in der Nut nicht behindert wird. Die Klammer kann vorteilhaft, insbesondere kraftschlüssig, am Stab angebracht werden. Unter anderem kann die Klammer mit geringem Aufwand am Stab angebracht werden. Die Verbindungsvorrichtung kann ein drittes Material sein, das den Einschnitt zumindest teilweise ausfüllt, wobei das dritte Material bei einer Temperatur, die mindestens gleich dem Schmelzpunkt des ersten Materials ist, ein Biegen des Stabendes mit einer geringeren Kraft ermöglicht, als bei einem Stab, der nur aus dem ersten Material besteht. Der Stab kann so vorteilhaft die üblicherweise bei einem Käfigläufer verwendete Form aufweisen. Unter anderem sind geringe, insbesondere keine, Anpassungen des Käfigläufers an eine geänderte Stabgeometrie notwendig, die zu einer Verschlechterung des Wirkungsgrads der elektrischen Maschine führt. Es können auch vorteilhaft die gewohnten Herstellungsprozesse mit einer hohen Qualität zur Erreichung eines Käfigläufers mit hohem Wirkungsgrad verwendet werden.

Der Einschnitt kann vorteilhaft mit geringen Aufwand hergestellt werden. So kann der Einschnitt durch ein Anordnen der Teilleiter zu der Hüllkurve des Stabes und durch ein zumindest teilweise Ausfüllen des Einschnitts mit dem dritten Material in einem geschmolzenen Zustand hergestellt werden.

Damit das Biegen des Stabendes mit einer geringeren Kraft ermöglicht wird als bei einem Stab, der nur aus dem ersten Material besteht, kann das dritte Material den Einschnitt nur teilweise in axialer Stabrichtung ausfüllen. Es kann so durch das dritte Material eine vorteilhafte feste punktuelle Verbindung erreicht werden.

Damit das Biegen des Stabendes mit einer geringeren Kraft ermöglicht wird als bei einem Stab, der nur aus dem ersten Material besteht, kann das dritte Material einen Schmelzpunkt aufweisen, der einen Wert von bis zu einem Wert des Schmelzpunkts des ersten Materials aufweist. So ist der Stab vorteilhaft beim Erstarren der Schmelze noch biegbar und nach dem Erstarren vorteilhaft fest.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Figuren näher erläutert werden. Es zeigen:
- FIG 1: ein erstes Ausführungsbeispiel einer elektrischen Maschine, die ein erstes Ausführungsbeispiel eines Käfigläufers umfasst,
- FIG 2: ein zweites Ausführungsbeispiel einer elektrischen Maschine, die ein zweites Ausführungsbeispiel eines Käfigläufers umfasst,
- FIG 3: ein drittes Ausführungsbeispiel einer elektrischen Maschine, die ein drittes Ausführungsbeispiel eines Käfigläufers umfasst,
- FIG 4: ein viertes Ausführungsbeispiel einer elektrischen Maschine, die ein viertes Ausführungsbeispiel eines Käfigläufers umfasst,
- FIG 5: einen Ausschnitt eines Querschnitts entlang der Linie V-V der FIG 4,
- FIG 6: ein fünftes, sechstes, siebentes und achtes Ausführungsbeispiel einer elektrischen Maschine, die ein fünftes, sechstes, siebentes oder achtes Ausführungsbeispiel eines Käfigläufers umfasst,
- FIG 7: einen Ausschnitt eines Querschnitts entlang der Linie VII-VII der FIG 6,
- FIG 8: einen Ausschnitt eines Querschnitts entlang der Linie VIII-VIII der FIG 6,
- FIG 9: einen Ausschnitt eines Querschnitts entlang der Linie IX-IX der FIG 6,
- FIG 10: einen Ausschnitt eines Querschnitts entlang der Linie X-X der FIG 6.

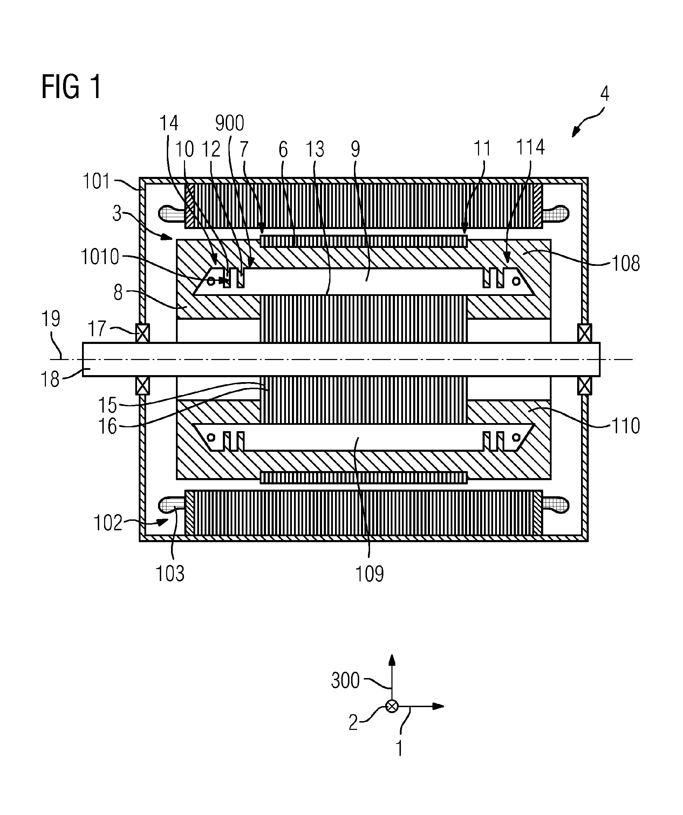

FIG 1 zeigt ein erstes Ausführungsbeispiel einer elektrischen Maschine 4, die ein erstes Ausführungsbeispiel eines Käfigläufers 3 umfasst. Die elektrische Maschine 4 ist eine Asynchronmaschine und weist ein Gehäuse 101 auf, in dem der Stator 102 angeordnet ist. Der Stator 102 weist eine Wicklung 103 auf. Der Käfigläufer 3 ist auf einer Welle 18 befestigt, die über Wälzlager 17 um die Drehachse 19 im Gehäuse 101 drehbar gelagert ist. Der Käfigläufer 3 umfasst ein Läuferblechpaket 5, das eine Nut 6 aufweist, ein an einem axialen Ende 7 des Läuferblechpakets 5 angegossener Kurzschlussring 8, der ein erstes Material 108 aufweist, und einen Stab 9, der in der Nut 6 angeordnet ist und ein Stabende 14 aufweist. Das Läuferblechpaket 5 umfasst Bleche, die von dem axialen Ende 7 des Läuferblechpakets 5 zu einem weiteren axialen Ende 11 des Läuferblechpakets 5 geschichtet angeordnet sind. Das Läuferblechpaket 5 weist z.B. an dem dem axialen Ende 7 ein Blech 15 und ein weiteres Blech 16 auf. Das Stabende 14 ist durch einen Einschnitt 10 biegbar, wobei der Einschnitt 10 eine Schnittfläche 1010 mit dem Stabende 14 aufweist. Das erste Material 108 ist Aluminium und wurde in einem Druckgussprozess an den Käfigläufer 3 angegossen.

Eine Wicklung des Käfigläufers 3 weist dem Stab 9 einen weiteren Stab 109, den Kurzschlussring 8 und einen weiteren Kurzschlussring 110 auf, sowie weitere Stäbe, die in weiteren Nuten des Käfigläufers 3 angeordnet sind. Die Stabenden des weiteren Stabes 109 und der weiteren Stäbe sind vorteilhaft in der gleichen Weise wie das Stabende 14 ausgebildet, damit diese durch den angegossenen Kurzschlussring 8 elektrisch und mechanisch vorteilhaft in gleicher Weise wie der Stab 9 mit dem angegossenen Kurzschlussring 8 verbunden sind. An dem weitern axialen Ende 11 des Läuferblechpakets 5 sind der Stab 9 und der weitere Stab 109 bzw. weitere Stäbe entsprechend durch einen weiteren angegossenen Kurzschlussring 110 vorteilhaft in gleicher Weise wie der Stab 9 an dem Stabende 14 mit dem angegossenen Kurzschlussring 8 verbunden. Der Stab 9, der weitere Stab 109 und die weiteren Stäbe weisen ein zweites Material auf, das Kupfer ist.

Eine axiale Richtung ist eine Richtung parallel zur Drehachse 19, eine radiale Richtung ist eine Richtung senkrecht zur Drehachse 19. Entfernt man sich von der Drehachse in einer radialen Richtung, erreicht man zunächst den Nutgrund 13 der Nut und dann den Stab 19, der in der Nut 6 angeordnet ist. Das Stabende 14 weist einen weiteren Einschnitt 12 auf, so dass das Stabende mehrere Einschnitte aufweist. Es kann so vorteilhaft ein höheres Maß an Biegbarkeit des Stabendes 14 erreicht werden, wobei der elektrische Widerstand des Stabs 9 vorteilhaft niedrig ist, da der Wert für eine kleinste wirksame Querschnittsfläche für den elektrischen Widerstand gegenüber einem Stab mit nur einem Einschnitt 10 unverändert ist. Eine Mantelfläche 900, die eine Oberfläche des Stabendes 14 ist, weist den Einschnitt 10 und den weiteren Einschnitt 12 in einem Bereich der Mantelfläche 900, der in einer radialen Richtung von der Drehachse 19 abgewandt ist, auf. Die Schnittfläche 1010 erstreckt sich über mehr als 60 Prozent einer Stabhöhe, so dass der Stab 9 einem Schrumpfen des ersten Materials 108 bei einem Erstarren der Schmelze nach oder während eines Angiessens des Kurzschlussrings 8 folgen kann. Der Stab 9 kann so dem Schrumpfen des ersten Materials 108 beim Erstarren der Schmelze in Richtung der Drehachse 19 folgen.

Die Einschnitte 10, 12 erstrecken sich von der Mantelfläche 900 mit einer Einschnitttiefe in den Stab 9 hinein erstreckt. Die Einschnitttiefe beträgt mehr als 60 Prozent der Stabhöhe. Das Stabende 14 weist eine stärkere Biegung als ein Stababschnitt auf, der innerhalb der Nut 6 angeordnet ist. Die stärkere Biegung ist in keiner der Figuren dargestellt. Der Stababschnitt befindet sich zwischen dem axialen Ende 7 und dem weiteren axialen Ende 11 des Läuferblechpakets 5.

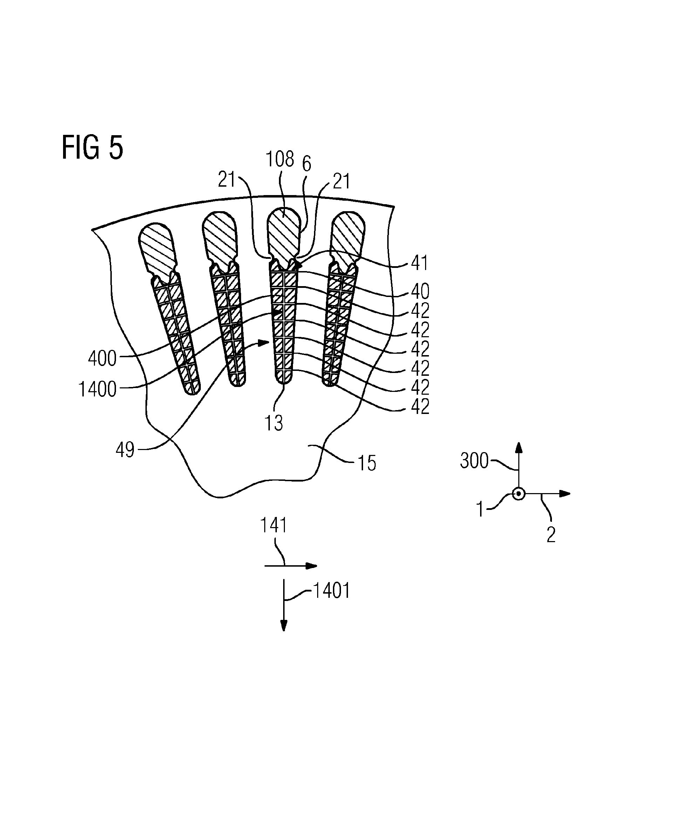

Der Stab 9 weist eine größte Erstreckung in einer axialen Stabrichtung 1 von dem Stabende 14 zu einem weiteren Stabende 114 auf, die als Stablänge gemessen wird. Der Stab 9 ist im Wesentlichen in der Nut 6 so angeordnet, dass eine axiale Richtung des Käfigläufers 3 bzw. der elektrischen Maschine 4 parallel zu der axialen Stabrichtung 1 verläuft. Es erstrecken sich senkrecht zu der axialen Stabrichtung 1 innerhalb des Stabes 9 Querschnittsebenen. Der Stab 9 weist in den Querschnittsebenen eine erste Stabrichtung 2 auf, in der eine Stabbreite gemessen wird, und eine zweite Stabrichtung 300 auf, in der eine Stabhöhe gemessen wird. Die Stabhöhe ist größer als die Stabbreite. Der Stab 9 ist unsymmetrisch zur ersten Stabrichtung 2, da er Querschnittsebenen mit einer Hüllkurve wie der Stab 49 im vierten Ausführungsbeispiel gemäß der FIG 5 aufweist.

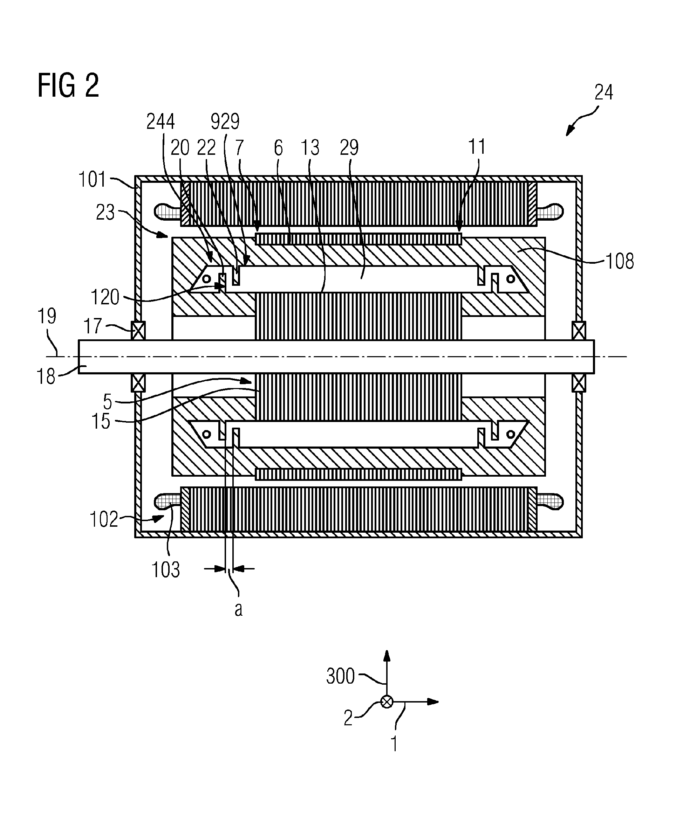

FIG 2 zeigt ein zweites Ausführungsbeispiel einer elektrischen Maschine 24, die ein zweites Ausführungsbeispiel eines Käfigläufers 23 umfasst. Das Stabende 244 ist durch einen Einschnitt 22, den das Stabende 244 in einem Bereich der Mantelfläche 929 aufweist, der in einer radialen Richtung von der Drehachse 19 abgewandt ist, biegbar. Eine Mantelfläche 929 des Stabs 29 weist neben dem Einschnitt 22 einen weiteren Einschnitt 20 an einer dem Einschnitt 22 gegenüberliegenden Seite der Mantelfläche 929 auf, wobei die Mantelfläche 929 den weiteren Einschnitt 20 in der axialen Stabrichtung 1 versetzt zu dem Einschnitt 22 aufweist. So ist das Stabende 244 vorteilhaft in axialer Stabrichtung 1 nachgebend, damit das Stabende 244 den beim Schrumpfen des ersten Material 108 der Schmelze gegebenenfalls auch in axialer Stabrichtung 1 wirkenden Kräfte nachgeben kann. Der weitere Einschnitt 20 ist in der axialen Stabrichtung so versetzt, dass ein axialer Abstand a des weiteren Einschnitts 20 vom Einschnitt 22 in axialer Stabrichtung 1 mindestens einen Wert aufweist, der der Stabhöhe vermindert um die Einschnitttiefe des Einschnitts 22 bzw. des weiteren Einschnitts 20 entspricht. Es kann so vorteilhaft ein höheres Maß an Biegbarkeit des Stabendes 244 erreicht werden, wobei der elektrische Widerstand des Stabs 29 vorteilhaft niedrig ist, da der Wert für eine kleinste wirksame Querschnittsfläche für den elektrischen Widerstand gegenüber einem Stab 29 mit nur einem Einschnitt 22 unverändert ist. So wird ein für den elektrischen Widerstand wirksamer Querschnitt erreicht, der im Wesentlichen durch die Einschnitttiefe bestimmt wird.

Der Einschnitt 22 und der weitere Einschnitt 20 erstrecken sich über mehr als 60 Prozent der Stabhöhe in den Stab 29 hinein.

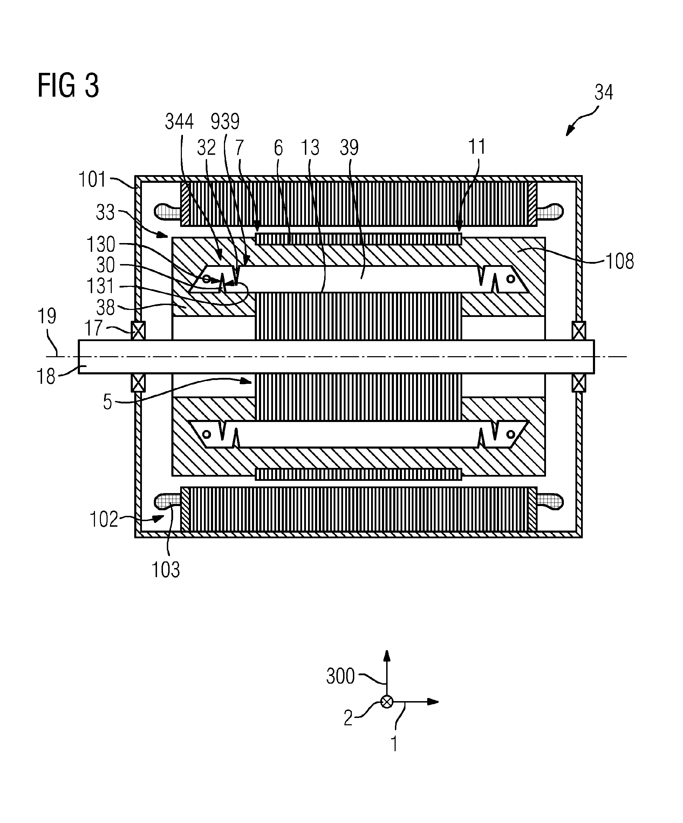

FIG 3 zeigt ein drittes Ausführungsbeispiel einer elektrischen Maschine 34, die ein drittes Ausführungsbeispiel eines Käfigläufers 33 umfasst. Das Stabende 344 ist durch einen Einschnitt 32, den das Stabende 344 in einem Bereich einer Mantelfläche 939 aufweist, der in einer radialen Richtung von der Drehachse 19 abgewandt ist, biegbar. Die Mantelfläche 939 des Stabendes 344 eines Stabes 39 weist den Einschnitt 32 auf. Der Stab 39 weist einen weiteren Einschnitt 30 auf, der eine Schnittfläche 130 mit dem Stabende 344 bildet. Der weitere Einschnitt 30 weist eine weitere Schnittfläche 131 mit dem Stabende 344 auf. Der weitere Einschnitt 30 erstreckt sich keilförmig von der Mantelfläche 939 in den Stab 39 bis zu einer Einschnitttiefe hinein. Der Einschnitt 32 erstreckt sich von der Mantelfläche 939 keilförmig in den Stab 39 bis zu einer Einschnitttiefe in den Stab 39 hinein. Hierdurch kann sich das ersten Materials 108 beim Erstarren nach oder während des Angiessens des Kurzschlussrings 38 beim Schrumpfen an den Stab 39 anlegen bzw. andrücken, so dass eine Verbindung zwischen Stab 39 und dem Kurzschlussring 38 mit niedrigem elektrischen Widerstand entsteht. Die Eindringtiefe des Einschnitts 32 und des weiteren Einschnitts 30 beträgt mehr als 60 Prozent der Stabhöhe des Stabs 39. Die Mantelfläche 939 weist den weiteren Einschnitt 30 an einer dem Einschnitt 32 gegenüberliegenden Seite auf, wobei die Mantelfläche 939 den weiteren Einschnitt 30 in der axialen Stabrichtung 1 versetzt zu dem Einschnitt 32 aufweist.

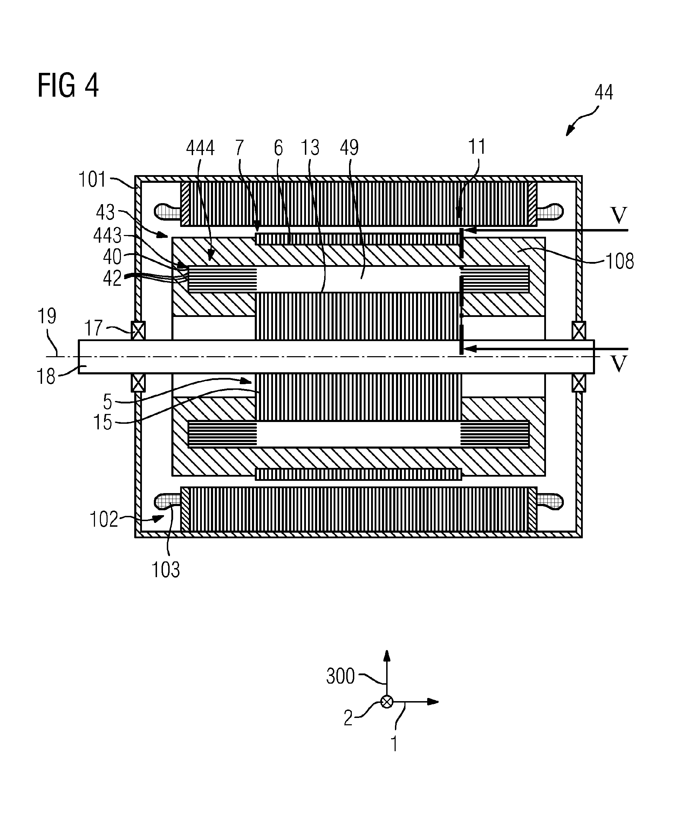

FIG 4 zeigt ein viertes Ausführungsbeispiel einer elektrischen Maschine 44, die ein erstes Ausführungsbeispiel eines Käfigläufers 43 umfasst. Ein Stabende 444 ist durch einen Einschnitt 40, den das Stabende 444 aufweist, biegbar. Eine Stirnfläche 443 des Stabes 49 weist den Einschnitt 40 auf. Das Stabende 444 weist an der Stirnfläche 443 einen weiteren Einschnitt 42 auf. Das Läuferblechpaket 5 umfasst an dem axialen Ende 7 ein erstes Blech 15.

FIG 5 zeigt einen Ausschnitt eines Querschnitts entlang der Linie V-V der FIG 4. Der Ausschnitt des Querschnitts entlang der Linie V-V entspricht einem entsprechenden Ausschnitt eines Querschnitts entlang des ersten Bleches 15 an dem axialen Ende 7 des Käfigläufers 43. Der Einschnitt 40 an der Stirnfläche 443 erstreckt sich in einer Richtung 141, die eine betragsmäßig größte vektorielle Komponente in der ersten Stabrichtung 2 aufweist. Der Einschnitt 40 weist eine Schnittfläche 41 mit dem Stabende 444 auf.

Das Stabende 444 des Stabs 49 weist einen Einschnitt 400 in die Stirnfläche 443 auf, der sich in einer Richtung 1401 erstreckt, die eine betragsmäßig größte vektorielle Komponente in der zweiten Stabrichtung 300 aufweist. Dieser Einschnitt 400 weist eine Schnittfläche 1400 mit dem Stabende 444 auf.

Wie in FIG 4 gezeigt, enden die Einschnitte 40, 42 innerhalb des Stabes 49. Die Einschnitte 40, 42 enden in einen Bereich des Stabes 49, der bereits geringfügig in der Nut 6 angeordnet ist. Geringfügig bedeutet dabei, dass die Einschnitte 40, 42 um eine Stärke des Bleches 15 in die Nut 6 hineinragen. So kommt der Ausschnitt des Querschnitts entlang der Linie V-V gemäß der FIG 5 zustande.

Der Stab 49 ist in einem Nutgrund 13 der Nut 6 angeordnet. Das erste Material 108 ist in einem Bereich der Nut 6 vorhanden, der in einer radialen Richtung weiter von der Drehachse 19 entfernt ist als der Stab 49. Der Käfigläufer 43 ist in der FIG 4 in einer Position gezeigt in der die radiale Richtung der zweiten Stabrichtung 300 entspricht.

Das Läuferblechpaket 5 kann in der Nut 6 Positionierelemente 21 aufweisen. Diese können den Stab 49 vorteilhaft in einer definierten Lage halten, um beim Herstellen des Käfigläufers 43 die Position des Stabs 49 im Nutgrund 13 aufrechtzuerhalten. Das erste Blech 15 weist die Positionierelemente 21 auf, wobei diese einstückig mit dem Blech 15 verbunden sind. So kann das erste Blech 15 mit seinen Positionierelementen 21 aus einem Stück Blech hergestellt werden. In vorteilhafter Weise weist ein erstes Blech 15 an dem weiteren axialen Ende 11 des Läuferblechpakets 5 auch Positionierelemente 21 auf. Dadurch, dass das Stabende 444 durch die Einschnitte 40, 42, 400 eine stärkere Biegung aufweist als ein Stababschnitt, der innerhalb der Nut 6 angeordnet ist, kann das Stabende 444 dem Schrumpfen des ersten Materials 108 beim Erstarren der Schmelze vorteilhaft folgen, ohne dass die Positionierelemente 21 dies merklich behindern.

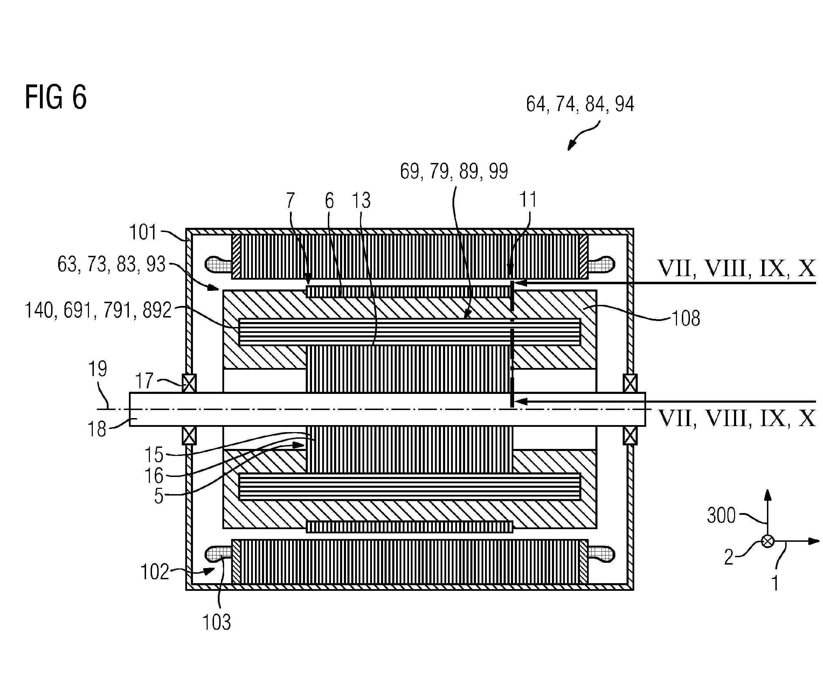

FIG 6 zeigt ein fünftes, sechstes, siebentes und achtes Ausführungsbeispiel einer elektrischen Maschine, die ein fünftes, sechstes, siebentes oder achtes Ausführungsbeispiel eines Käfigläufers umfasst. Die Stabenden der Stäbe 69, 79, 89, 99 weisen Einschnitte 140, 691, 791, 892 und weitere Einschnitte auf. Die Abstände in der zweiten Stabrichtung 300 der Einschnitte 140, 691, 791, 892 und weiteren Einschnitte sind nicht für alle Ausführungsbeispiele gleich. Die FIG 6 macht über die Abstände keine Aussage. Sollten die Abstände der Ausführungsbeispiele in Relation zueinander in Figuren dargestellt werden, müsste man für jedes Ausführungsbeispiel eine eigene Figur erstellen und die Abstände gemäß der Beschreibung qualitativ einzeichnen.

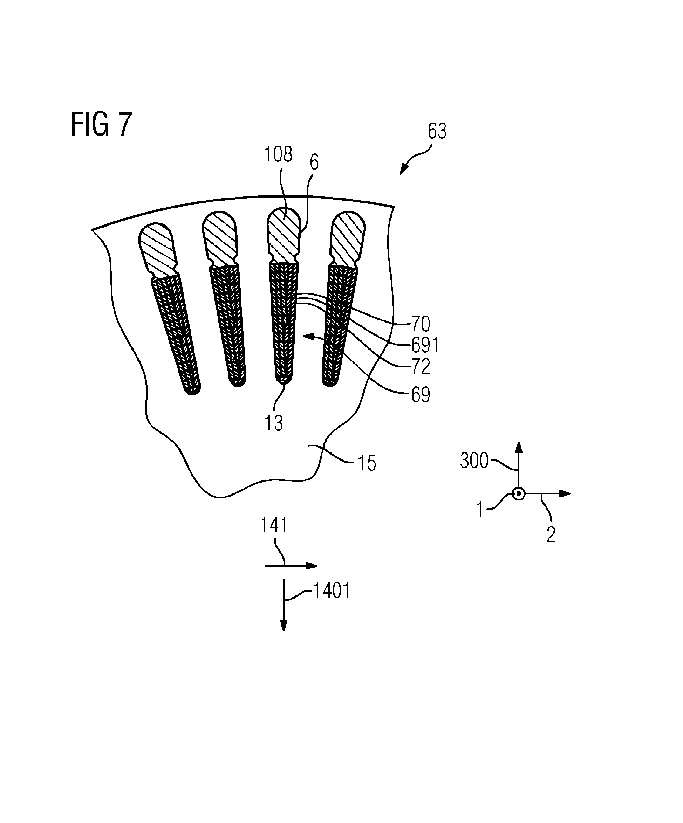

FIG 7 zeigt einen Ausschnitt eines Querschnitts entlang der Linie VII-VII des fünften Ausführungsbeispiels einer elektrischen Maschine 64, die ein fünftes Ausführungsbeispiel eines Käfigläufers 63 umfasst, gemäß FIG 6. Der Ausschnitt des Querschnitts entlang der Linie VII-VII entspricht einem entsprechenden Ausschnitt eines Querschnitts entlang des ersten Bleches 15 an dem axialen Ende 7 des Käfigläufers 63. Eine Schnittfläche, die der Einschnitt 691 mit dem Stabende aufweist, erstreckt sich zwischen einem Teilleiter 70 und einem weiteren Teilleiter 72, die sich entlang der axialen Stabrichtung 1 erstrecken, wobei ein Querschnitt des Teilleiters 70 und ein Querschnitt des weiteren Teilleiters 72 innerhalb der Querschnittsebenen eines Stabs 69 angeordnet sind. Querschnitte des Teilleiters 70 und der weiteren Teilleiter in der Nut 6 sind innerhalb der Querschnittsebenen des Stabes 69 angeordnet. Die Querschnittsebenen des Stabes 69 bilden eine Hüllkurve, die den Teilleiter 70 und die weiteren Teilleiter umschließt. Der Teilleiter 70 und die weiteren Teilleiter 72 weisen einen rechteckförmigen Querschnitt auf.

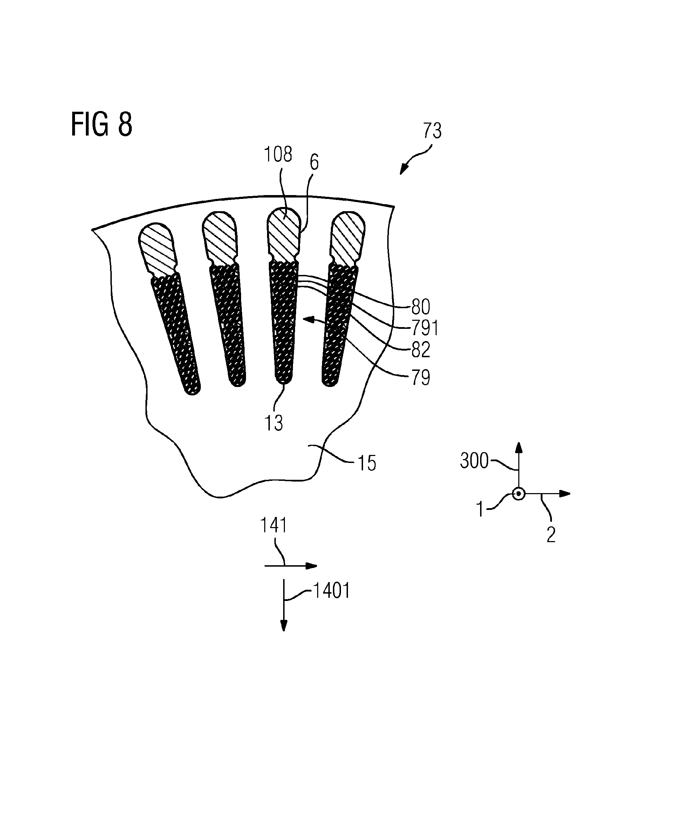

FIG 8 zeigt einen Ausschnitt eines Querschnitts entlang der Linie VIII-VIII des sechsten Ausführungsbeispiels einer elektrischen Maschine 74, die ein sechstes Ausführungsbeispiel eines Käfigläufers 73 in FIG 6 umfasst. Der Ausschnitt des Querschnitts entlang der Linie VIII-VIII entspricht einem entsprechenden Ausschnitt eines Querschnitts entlang des ersten Bleches 15 an dem axialen Ende 7 des Käfigläufers 73. Eine Schnittfläche, die der Einschnitt 791 mit dem Stabende aufweist, erstreckt sich zwischen dem Teilleiter 80 und dem weiteren Teilleiter 82, die sich entlang der axialen Stabrichtung 1 erstrecken, wobei ein Querschnitt des Teilleiters 80 und ein Querschnitt des weiteren Teilleiters 82 innerhalb der Querschnittsebenen eines Stabs 79 angeordnet sind. Der Teilleiter 80 und die weiteren Teilleiter in der Nut 6 sind innerhalb der Querschnittsebenen des Stabs 79 angeordnet. Die Querschnittsebenen des Stabes 79 bilden eine Hüllkurve, die den Teilleiter 80 und die weiteren Teilleiter umschließt. Der Teilleiter 80 und die weiteren Teilleiter weisen einen kreisförmigen Querschnitt auf.

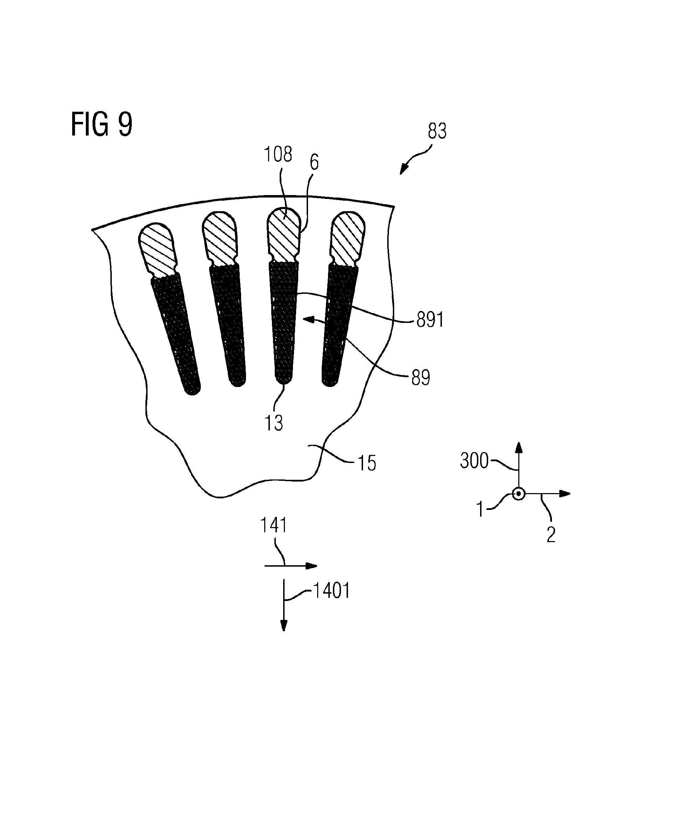

FIG 9 zeigt einen Ausschnitt eines Querschnitts entlang der Linie IX-IX des siebenten Ausführungsbeispiels einer elektrischen Maschine 84, die ein siebentes Ausführungsbeispiel eines Käfigläufers 83 in FIG 6 umfasst. Der Ausschnitt des Querschnitts entlang der Linie IX-IX entspricht einem entsprechenden Ausschnitt eines Querschnitts entlang des ersten Bleches 15 an dem axialen Ende 7 des Käfigläufers 83. Die Teilleiter 891 weisen einen kreisförmigen Querschnitt mit einem Durchmesser auf, der einen Wert von bis zu 1 mm aufweist.

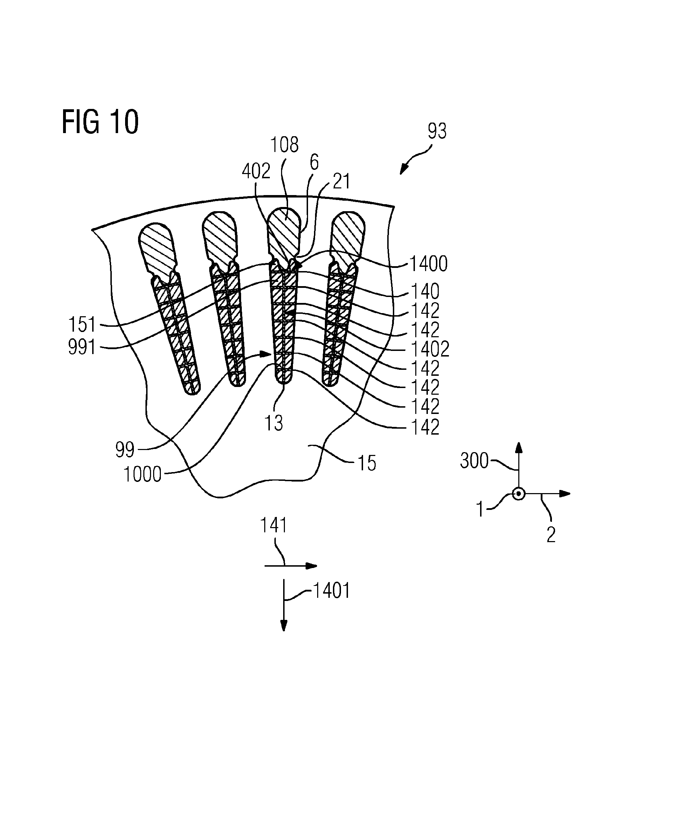

FIG 10 zeigt einen Ausschnitt eines Querschnitts entlang der Linie X-X eines achten Ausführungsbeispiels einer elektrischen Maschine 94, die ein achtes Ausführungsbeispiel eines Käfigläufers 93 in FIG 6 umfasst. Der Ausschnitt des Querschnitts entlang der Linie X-X entspricht einem entsprechenden Ausschnitt eines Querschnitts entlang des ersten Bleches 15 an dem axialen Ende 7 des Käfigläufers 93. Ein Stab 99, der einen Teilleiter 151 und weitere Teilleiter 991 aufweist, die sich entlang der axialen Stabrichtung 1 erstrecken, weist an dem Einschnitt 140 eine Verbindungsvorrichtung 1000 auf. Diese Verbindungsvorrichtung 1000 weist ein drittes Material auf, das Aluminium ist.

Der Stab 99 weist weitere Einschnitte 142 an der Stirnfläche auf, die sich in einer Richtung 141 erstrecken, die eine betragsmäßig größte vektorielle Komponente in der ersten Stabrichtung 2 aufweist. Der Stab weist auch einen Einschnitt 402 an der Stirnfläche auf, der sich in einer Richtung 1401 erstreckt, die eine betragsmäßig größte vektorielle Komponente in der zweiten Stabrichtung 300 aufweist. Alle Einschnitte 140, 142 weisen eine Schnittfläche 1400, 1402 mit dem Stabende auf. Die Schnittflächen 1400, 1402 erstrecken sich von einem Stabende zu einem weiteren Stabende des Stabs 99. Die Schnittflächen 1400, 1402 erstrecken sich zwischen dem Teilleiter 151 und den weiterem Teilleitern 991, die sich entlang der axialen Stabrichtung erstrecken, wobei die Querschnitte des Teilleiters 151 und der weiteren Teilleiter innerhalb der Querschnittsebenen des Stabs 99 angeordnet sind. Die Verbindungsvorrichtung 1000 füllt zumindest teilweise alle Einschnitte 140, 142, 402 aus. Der Stab 99 weist so vorteilhaft die üblicherweise bei einem Käfigläufer verwendete Form auf. Die Verbindungsvorrichtung 1000 verbindet den Teilleiter 151 und die weiteren Teilleiter so, dass der Stab 99 vorteilhaft in einem Stück in die Nut 6 eingeführt werden kann und auch vor dem Einführen in die Nut 6 in einfacher Weise in einem Herstellungsprozess verwendet werden kann.

Die Einschnitte 10, 12, 20, 22, 30, 32, 40, 42 in den Stäben 19, 109, 29, 39, 49 der ersten bis vierten Ausführungsbeispiele sind durch Einsägen der Stäbe 19, 109, 29, 39, 49 hergestellt worden.

Die Einschnitte 691, 791, 892, 140, 142, 402 in den Stäben 69, 79, 89, 99 der fünften bis achten Ausführungsbeispiele sind durch ein Anordnen der Teilleiter 70, 80, 151, 891, 991, den weiteren Teilleitern 72, 82, 152 und weiterer Teilleiter zu der Hüllkurve der Stäbe 69, 79, 89, 99 hergestellt worden.

Beim achten Ausführungsbeispiel wurden die Einschnitte 140, 142, 402 im Stab 99 zusätzlich zumindest teilweise mit dem dritten Material, das Aluminium ist, in einem geschmolzenen Zustand des dritten Materials ausgefüllt, um die Einschnitt 140, 142, 402 herzustellen. Unter anderem kann der Stab 99 so als ein einzelner Stab vorteilhaft in die Nut 6 geschoben werden.

Obwohl die Erfindung im Detail durch bevorzugte Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Käfigläufer (3,23,33,43,63,73,83,93) für eine elektrische Maschine (4,24,34,44,64,74,84,94) umfassend
- ein Läuferblechpaket (5), das eine Nut (6) aufweist,
- ein an einem axialen Ende (7) des Läuferblechpakets (5) angegossener Kurzschlussring (8,38), der ein erstes Material (108) aufweist, und
- einen Stab (9, 29, 39, 49, 69, 79, 99), der in der Nut (6) angeordnet ist und ein Stabende (14,244,344,444) aufweist,
**dadurch gekennzeichnet, dass** das Stabende (14,244,344,444) durch einen Einschnitt (10,20,30,40, 140,402,691,791,892), den das Stabende (14,244,344,444) aufweist, biegbar ist, wobei der Einschnitt (10,20,30,40,140, 402,691,791,892) eine Schnittfläche (1010,120,130,41,1400, 1402) mit dem Stabende (14,244,344,444) aufweist.

2. Käfigläufer (3,23,33,43,63,73,83,93) nach Anspruch 1, wobei das Stabende (14,244,344,444) durch den Einschnitt (10, 20,30,40,140,402,691,791,892) eine stärkere Biegung aufweist, als ein Stababschnitt, der innerhalb der Nut (6) angeordnet ist.

3. Käfigläufer (3,23,33,43,63,73,83,93) nach Anspruch 1 oder 2, wobei eine Mantelfläche (900, 939, 929) des Stabs (9,29,39) den Einschnitt (10,20,30) aufweist.

4. Käfigläufer (43,63,73,83,93) nach Anspruch 1 oder 2, wobei eine Stirnfläche (443) des Stabs (49,69,79,99) den Einschnitt (40,140,402,691,791,892) aufweist.

5. Käfigläufer (43,63,73,83,93) nach Anspruch 4, wobei der Einschnitt (40,140,402,691,791,892) sich an der Stirnfläche (443) in einer Richtung (141) erstreckt, die eine betragsmäßig größte vektorielle Komponente in einer ersten Stabrichtung (2) aufweist.

6. Käfigläufer (43,63,73,83,93) nach Anspruch 4, wobei der Einschnitt (40,140,402,691,791,892) sich an der Stirnfläche (443) in einer Richtung (1401) erstreckt, die eine betragsmäßig größte vektorielle Komponente in einer zweiten Stabrichtung (300) aufweist.

7. Käfigläufer (63,73,83,93) nach einem der Ansprüche 4 bis 6, wobei sich die Schnittfläche von einem Stabende zu einem weiteren Stabende des Stabs (69,79,89,99) erstreckt.

8. Käfigläufer (3,23,33,43) nach einem der Ansprüche 1 bis 6, wobei der Einschnitt (10,20,30,40) innerhalb des Stabs (9, 29, 39, 49) endet.

9. Käfigläufer (93) nach einem der vorhergehenden Ansprüche, wobei der Stab (99) an dem Einschnitt (140,142,402) eine Verbindungsvorrichtung (1000) aufweist.

10. Elektrische Maschine (4,24,34,44,64,74,84,94) umfassend einen Käfigläufer (3,23,33,43,63,73,83,93) nach einem der vorhergehenden Ansprüche.

11. Stab (9, 29, 39, 49, 69, 79, 99) für einen Käfigläufer (3,23, 33,43,63,73,83,93) nach einem der Ansprüche 1 bis 9.

12. Verfahren zur Herstellung eines Käfigläufers (3,23,33,43, 63,73,83,93) nach einem der Ansprüche 1 bis 9, wobei das Stabende (14,244,344,444), das den Einschnitt (10,20,30,40,140, 402,691,791,892) aufweist, biegbar an der Nut (6) angeordnet wird.
